# EUROPÄISCHE PATENTSCHRIFT

(11) **EP 0 761 512 B1**
(45) Veröffentlichungstag und Bekanntmachung des Hinweises auf die Patenterteilung: **02.06.1999**
(21) Anmeldenummer: 96118674.9
(22) Anmeldetag: 01.09.1994
(51) Int. Cl.: B60R 22/20

(54) **Kraftfahrzeug mit höheneinstellbarem Umlenkbeschlag für Sicherheitsgurte**
Motor vehicle with height adjustable return loop fitting for its safety belts
Véhicule automobile avec dispositif de renvoi latéral réglable en hauteur pour ses ceintures de sécurité

(30) Priorität: 15.01.1994 DE 9400638 U; 10.09.1993 DE 9313577 U
(43) Veröffentlichungstag der Anmeldung: 12.03.1997
(62) Teilanmeldung aus: 94113674.9
(73) Patentinhaber: R. SCHMIDT GMBH, 57368 Lennestadt (DE)
(72) Erfinder: Stenzel, Wolfgang, 59889 Eslohe-Cobbenrode (DE)
(74) Vertreter: Köchling, Conrad, Dipl.-Ing.

(56) Entgegenhaltungen:
- DE-U- 8 709 069
- DE-U- 9 303 104

## Beschreibung

Die Erfindung betrifft ein Kraftfahrzeug mit einem Karosserieteil, einer B- oder C-Säule und mit daran befestigbarem höheneinstellbarem Umlenkbeschlag für Sicherheitsgurte zur Anordnung in dem Kraftfahrzeug, bestehend aus einer ortsfest an dem Karosserieteil oder der Säule befestigbaren Schiene und einem an der Schiene rastend verstellbar geführten Schlitten als Halterung für den Umlenkbeschlag, wobei die Schiene orthogonal von den Randkanten der Schiene zur Schienenrückseite abragende Haltehakenpaare aufweist, die in säulenseitige Lochungen oder Lochungen des Karosserieteiles einsetzbar sind.

Aus der gattungsbildenden DE-U-93 03 104 ist ein Umlenkbeschlag dieser Art bekannt, dessen Schiene an beiden Enden mittels Befestigungsschrauben zu befestigen ist, wobei dazu das entsprechende Karosserieteil (die Säule) mit einer Gewindeausbildung und Verstärkung versehen werden muß, um die entsprechenden einwirkenden Kräfte aufnehmen zu können.

Zur Festlegung der Schienen von Umlenkbeschlägen ist es üblich, diese mit Schrauben festzulegen. Diese Ausbildung ist aus vielerlei Gründen nachteilig, wobei zudem ein unerwünschter Klappereffekt auftreten kann, sofern die Schraubverbindungen nicht ganz fest angezogen sind. Um dieses Problem zu beseitigen, schlägt die Erfindung vor, einen Umlenkbeschlag nach dem 0berbegriff des Anspruches 1 derart weiter zu bilden, daß er in einfacher Weise lagegesichert werden kann, wobei zudem Klappergeräusche weitestgehend unterbunden sein sollen.

Zur Lösung dieser Aufgabe wird vorgeschlagen, daß an der Schiene ein Federelement befestigt ist, welches bei in Montagesollage befindlicher Schiene in eine entsprechende Aufnahme der Karosserie oder der B- oder C-Säule rastend eingesetzt ist, oder an der Karosserie, oder der B- oder C-Säule ein Federelement befestigt ist, welches in eine Aufnahme der Schiene rastend eingesetzt ist.

Durch diese Anordnung und Ausbildung ist es möglich, die entsprechende Schiene mit den Haken lagerichtig an der Karosseriesäule oder dergleichen zu befestigen, wobei in der Montagesollage das Federelement mit einer Aufnahme derart zusammenwirkt, daß einerseits eine ausreichende Fixierung der Schiene in der Sollage erfolgt und andererseits durch die Federwirkung eine gewisse Vorspannung auf die Hakenverbindung erzeugt wird, was dazu führt, daß Klappergeräusche, weitestgehend, wenn nicht gar vollständig, unterbunden sind.

Das Federelement kann aus Stahl oder auch aus Kunststoff bestehen. Es ist vorzugsweise an der Schiene befestigt, kann aber auch an der Karosseriesäule selbst fixiert sein. Da das Federelement im Crashfall keine Last aufnehmen muß, sondern die Last ausschließlich von den Haken der Schiene aufgenommen wird, kann das Federelement klein dimensioniert und auch aus kostengünstigen Werkstoffen gefertigt sein. Um eine entsprechende Schiene von der Karosseriesäule lösen zu können, ist das Federelement manuell oder mittels eines Werkzeuges zu entrasten, woraufhin die Schiene in einfacher Weise enthakt werden kann.

Eine bevorzugte Weiterbildung wird darin gesehen, daß am in Einbaulage oberen Ende der Schiene eine Federraste befestigt ist und das entsprechende Karosserieteil eine Lochung aufweist, in welche die Federraste bei in Montagesollage befindlicher Schiene eingreift.

Bei dieser Anordnung und Ausbildung ist der Einbau besonders einfach zu erreichen, indem die Schiene zunächst mit den Haken in die entsprechenden Öffnungen eingesetzt und in Längsrichtung verschoben wird, bis sich die Haken in der Sollposition befinden und das Federelement dann einrastet. Allerdings ist hierzu eine gesonderte Lochung in der Karosseriesäule vorzusehen, was einen zusätzlichen Fertigungsaufwand verursacht.

Um hier noch weitere Vorteile zu erreichen, ist vorgesehen, daß am oberen Ende der Schiene zwei Federrasten befestigt sind, die in einer Flucht mit den Haltehaken der Schiene ausgerichtet sind und in Montagesollage in Lochungen der Karosserie bzw. Säule einrastbar sind, die in Flucht mit den Fensterausschnitten ausgerichtet sind, in welche die Haltehaken eingreifen.

Durch diese Ausbildung ist es möglich, zusätzliche Lochungen in gleicher Art und Ausrichtung vorzusehen, wie sie auch zum Verhaken der Schiene an der Säule benötigt werden, wobei das Federelement oder die Federrasten dann in diese entsprechenden gleichartigen Lochungen eingesetzt werden kann bzw. können. Hierdurch wird der Fertigungsaufwand noch verringert und die Lagesicherung verbessert.

Schematisierte Ausführungsbeispiele der Erfindung sind in der Zeichnung dargestellt und im folgenden näher beschrieben.

Es zeigt:
- Figur 1: einen höhenverstellbaren Umlenkbeschlag in Montagesollposition in Seitenansicht gesehen;
- Figur 2: desgleichen in Ansicht;
- Figur 3 und 4: eine weitere Ausführungsform in Ansicht;
- Figur 5 und 6: eine weitere Ausführungsform in der Ansicht gemäß Figur 1 und 2.

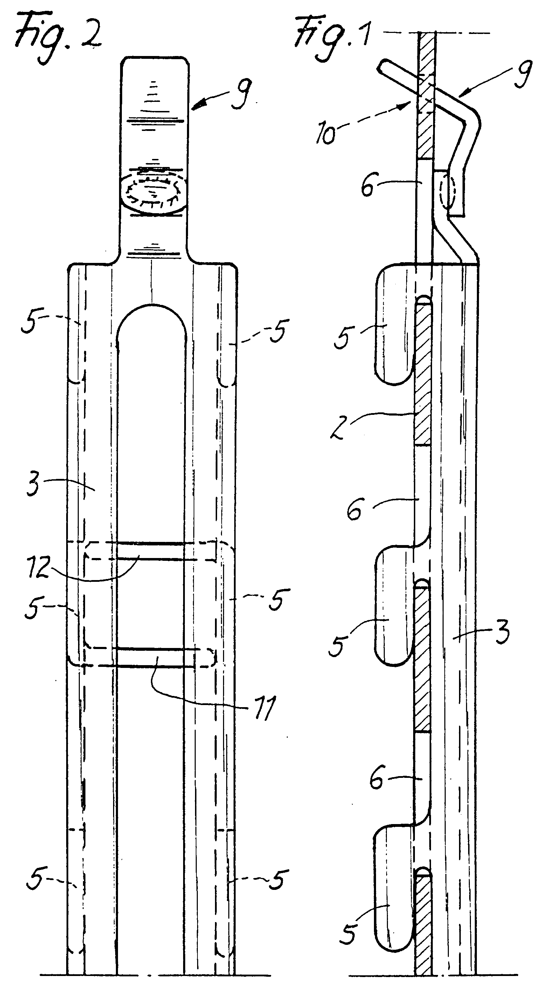

Der höheneinstellbare Umlenkbeschlag 1 besteht im wesentlichen aus einer ortsfest an einer Karosseriesäule 2 befestigbaren Schiene 3, die im Querschnitt U-förmig ausgebildet ist und aus Stahl besteht. An der Schiene 3 ist ein Schlitten (nicht gezeigt) vorzugsweise rastend verstellbar geführt, der als Halterung für den Umlenkbeschlag des Sicherheitsgurtes dient. Die Schiene 3 weist von ihren Randkanten abragende Haltehakenpaare 5 auf, die jeweils paarweise niveaugleich angeordnet sind und die in säulenseitige Fensterausschnitte 6 einsetzbar sind. Vorzugsweise weist die Schiene 3 nahe ihrer beiden Längsenden und im Mittelbereich solche Paare von Haltehaken 5 auf, wobei die von den Haken übergreifbaren Bereiche der Karosseriesäulen 2 oder dergleichen Karosserieteile verstärkungslos ausgebildet sind. Vorzugsweise sind mindestens drei Hakenpaare von Haken 5 angeordnet, wie beispielsweise in Figur 1 ersichtlich. Dabei sind zwei Paare nahe der Schienenenden (oben und unten) und eines etwa mittig zwischen diesen angeordnet.

Das in Einbaurichtung obere Ende der Schiene 3 ist über die dortigen Haken 5 hinaus verlängert.

Wie schon oben ausgeführt, ist die säulenseitige Lochung für jeweils ein Haltehakenpaar 5 als Fensterausschnitt 6 ausgebildet. Der erste Haltehaken 5 eines jeden Haltehakenpaares weist einen Verlängerungsbereich 11 auf, der an das freie Ende des Haltehakens 5 anschließt. Auch der zweite Haltehaken 5 des Halehakenpaares weist einen Verlängerungsbereich 12 auf, der an das unfreie Ende des Haltehakens 5 anschließt.

Beide Verlängerungsbereiche 11,12 sind in der Fertigungsendposition rückseitig der Schiene 3 quer zum Schienenlängsverlauf gerichtet. Sie stützen sich mit ihrem freien Ende am unfreien Ende des ersten Haltehakens 5 oder am freien Ende des zweiten Haltehakens 5 ab, wobei der so aus den Haltehaken 5 und den Verlängerungen 11,12 gebildete Rahmen in den Fensterausschnitt der Säule 2 oder dergleichen Karosserieteil einsteckbar ist. Die Schiene wird also mit diesen "Rahmenelementen" orthogonal der entsprechenden Säule 2 zugeführt, so daß der aus den Teilen 5,11 und 12 gebildete Rahmen in den jeweiligen Fensterausschnitt eingesetzt werden kann und dann durch Verschiebung der Schiene 3 in Längsrichtung relativ nach unten die Haltehaken 5 die in vertikaler Einbausollage unten befindliche Randkante des Ausschnittes 6 übergreifen. Diese Position ist in Figur 1 verdeutlicht. Die freien Enden der Verlängerungen 11,12 können im Fertigungszustand auch so ausgerichtet sein, daß sie geringen Abstand vom freien Ende des entsprechenden Haltehakens 5 bzw. vom unfreien Ende des Haltehakens 5 auf der anderen Seite haben. Es ist aber auch möglich, die Enden der Verlängerungen 11,12 an den entsprechenden Bereichen der Haltehaken 5 zu fixieren, beispielsweise anzuheften oder anzuschweißen.

Der zwischen den Haltehaken 5 und den Verlängerungsbereichen 11 einerseits und der Schiene 3 andererseits gebildete Schlitz 15 ist gering breiter, als der Materialstärke der Säule 2 im Bereich des Fensterausschnittes 6 entspricht. Durch diese Gestaltung wird ein quasi selbst stabilisierendes sich aneinander abstützendes Hakenpaar gebildet, woraus in der Einbausollposition die Aufnahme von sehr hohen Zugkräften, beispielsweise im Crashfall ermöglicht ist.

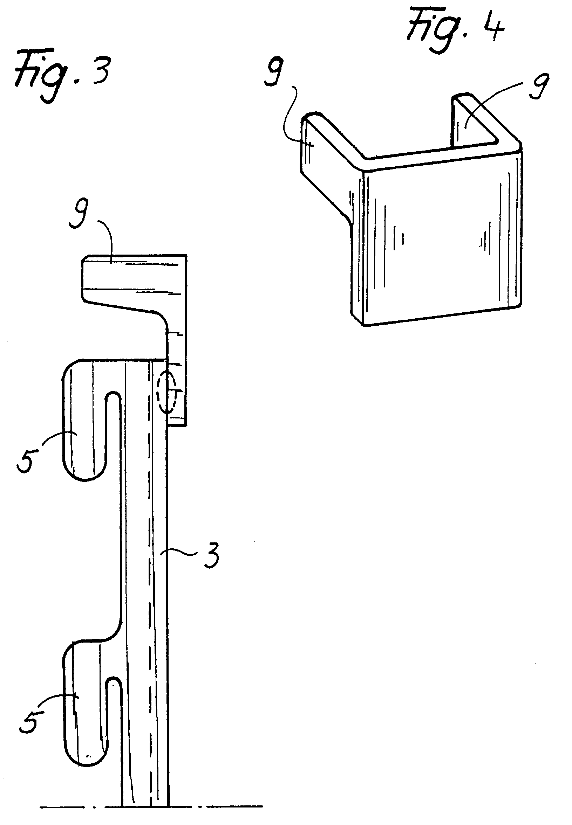

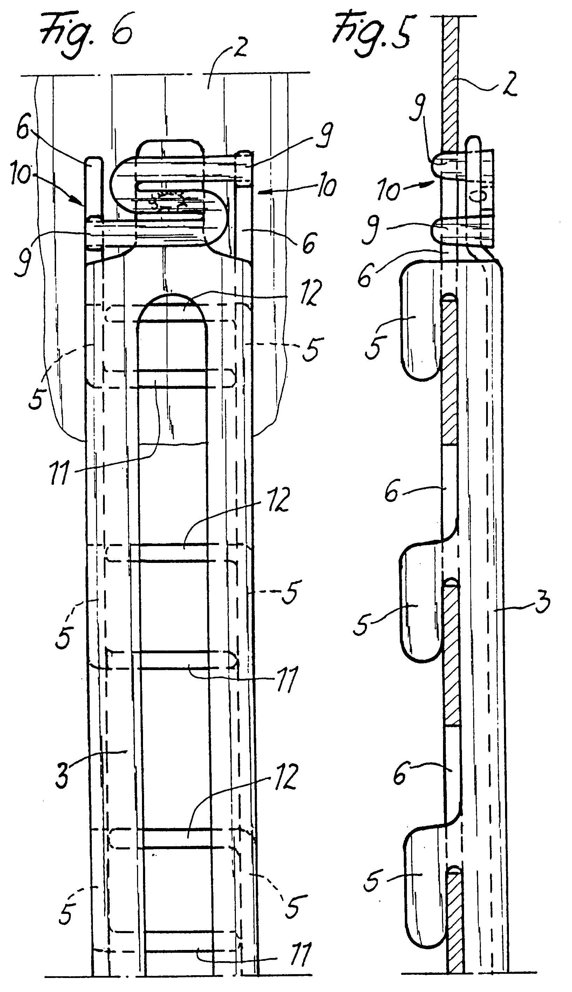

Die ortsfest an der Karosseriesäule 2 befestigbare Schiene 3 weist von den Seitenrandkanten abragende Haltehaken 5 paarweise und niveaugleich auf, die in säulenseitige Fensterausschnitte 6 einsetzbar sind. Dabei sind an jeder Schiene 3 mindestens 3 Hakenpaare mit Haken 5, vorzugsweise auch 4 Hakenpaare ausgebildet. An der Schiene 3 ist ein Federelement 9 befestigt, welches bei in Montagesollage befindlicher Schiene (beispielsweise gemäß Figur 1) in eine entsprechende Aufnahme 10 der Säule 2 rastend eingreift. Vorzugsweise ist das Federelement 9 am in Einbaulage oberen Ende der Schiene 3 befestigt, wobei das entsprechende Karosserieteil (Karosseriesäule 2) eine Lochung (bei 10) aufweist, in welche das Federelement in Form einer Federraste bei in Montagesollage befindlicher Schiene 3 (gemäß Figur 1) eingreift. Bei den Ausführungsformen gemäß Figur 3 bis 6 sind am oberen Ende der Schiene 3 als Federelemente 9 zwei Federrasten befestigt, die durch ein etwa U-förmiges Federblech gebildet sind. Diese Federrasten liegen in Flucht mit den Haltehaken 5. In Montagesollage greifen die Federrasten in entsprechende Lochungen der Säule 2 ein, die in Flucht mit den Fensterausschnitten 6 ausgerichtet sind, in welche die Haltehaken eingreifen. Diese Doppelausbildung der Federrasten ist auch bei der Ausführungsform gemäß Figur 5 und 6 realisiert, wobei dort die entsprechenden Aufnahmelochungen durch Fensterausschnitte 6 gebildet sein können, die auch zur Aufnahme der Haken 5 der Schiene 3 dienen. Das entsprechende Federelement kann aus Kunststoff oder auch aus Federstahlmaterial geformt sein, welches in der Draufsicht S-förmig ist, wie insbesondere aus Figur 6 ersichtlich, wobei die Schenkelenden der S-Form in der Zeichnungsebene gemäß Figur 6 nach unten abgebogen sind, so daß hierdurch die Federrasten gebildet sind. Vorzugsweise weisen die Federrasten Schrägflächen als Anzugsflächen auf, um Einbautoleranzen überbrücken zu können und eine vorgespannte Lage der Schiene 3 an der Säule 2 zu ermöglichen, woraus ein klapperfreier Sitz resultiert.

## Patentansprüche

1. Kraftfahrzeug mit einem Karosserieteil, einer B- oder C-Säule (2) und mit daran befestigbarem höheneinstellbarem Umlenkbeschlag für Sicherheitsgurte zur Anordnung in dem Kraftfahrzeug, bestehend aus einer ortsfest an dem Karosserieteil oder der Säule (2) befestigbaren Schiene (3) und einem an der Schiene rastend verstellbar geführten Schlitten als Halterung für den Umlenkbeschlag, wobei die Schiene (3) orthogonal von den Randkanten der Schiene zur Schienenrückseite abragende Haltehakenpaare (5) aufweist, die in säulenseitige Lochungen (6) oder Lochungen des Karoserieteiles einsetzbar sind, **dadurch gekennzeichnet,** daß an der Schiene (3) ein Federelement (9) befestigt ist, welches bei in Montagesollage befindlicher Schiene (3) in eine entsprechende Aufnahme (10) der Karosserie oder der B- oder C-Säule (2) rastend eingesetzt ist, oder an der Karosserie oder der B- oder C-Säule (2) ein Federelement (9) befestigt ist, welches in eine Aufnahme (10) der Schiene (3) rastend eingesetzt ist.

2. Kraftfahrzeug nach Anspruch 1, **dadurch gekennzeichnet,** daß am in Einbaulage oberen Ende der Schiene (3) eine Federraste befestigt ist und das entsprechende Karosserieteil eine Lochung aufweist, in welche die Federraste bei in Montagesollage befindlicher Schiene (3) eingreift.

3. Kraftfahrzeug nach Anspruch 1 oder 2, **dadurch gekennzeichnet**, daß am oberen Ende der Schiene (3) zwei Federrasten befestigt sind, die in einer Flucht mit den Haltehaken (5) der Schiene (3) ausgerichtet sind und in Montagesollage in Lochungen der Karosserie bzw. Säule (2) einrastbar sind, die in Flucht mit den Fensterausschnitten (6) ausgerichtet sind, in welche die Haltehaken (5) eingreifen.

## Claims

1. A motor vehicle having a bodyshell part, a B or C column (2) and having a height-adjustable return loop fixed thereto for safety belts for arrangement in the motor vehicle, consisting of a rail (3) which can be permanently attached to the bodyshell part or the column (2) and a slide which is adjustably guided in locking manner on the rail as a mounting for the return loop, wherein the rail (3) comprises pairs of retaining hooks (5) which project orthogonally from the edges of the rail to the rear of the rail, which can be inserted into the perforations on the side of the column (6) or perforations of the bodyshell part,
**characterised in that** fixed to the rail (3) is a spring element (9), which, when the rail (3) is situated in the desired mounting position, is inserted in locking manner into a corresponding receptacle (10) of the bodyshell or the B or C column (2), or attached to the bodyshell or the B or C column (2) is a spring element (9) which is inserted in locking manner into a receptacle (10) of the rail (3).

2. A motor vehicle according to Claim 1,
**characterised in that** fixed to the upper end of the rail (3) in the installed position is a spring catch and the corresponding bodyshell part comprises a perforation in which the spring catch engages when the rail (3) is located in the desired mounting position.

3. A motor vehicle according to Claim 1 or 2,
**characterised in that** fixed to the upper end of the rail (3) are two spring catches, which are located in an alignment with the retaining hooks (5) of the rail (3) and in the desired mounting position can engage in perforations of the bodyshell or column (2), which are located in alignment with the window openings (6) in which the retaining hooks (5) engage.

## Revendications

1. Véhicule à moteur doté d'un élément de carrosserie, d'une colonne B ou C (2) et d'une ferrure de renvoi pour ceintures de sécurité pouvant y être fixée réglable en hauteur, destinée à être installée dans le véhicule à moteur, se composant d'une glissière (3) pouvant être fixée à l'élément de carrosserie ou à la colonne (2) de façon fixe et d'un glissoir coulissant dans la glissière et réglable par crantage en tant que support d'attache de la ferrure de renvoi, la glissière (3) comportant des paires de crochets de fixation (5) partant en saillie orthogonalement des bords de la glissière vers la face arrière de la glissière, lesquelles peuvent s'insérer dans des orifices côté colonne (6) ou des orifices de l'élément de carrosserie, caractérisé en ce qu'un élément de ressort (9) est fixé à la glissière (3), qui, lorsque la glissière se trouve en position de montage théorique, est inséré de façon encliquetable dans un logement approprié (10) de la carrosserie ou de la colonne B ou C (2), ou en ce qu'un élément de ressort (9) est fixé à la carrosserie ou à la colonne B ou C (2) qui est inséré de façon encliquetable dans un logement (10) de la glissière (3).

2. Véhicule à moteur selon la revendication 1, caractérisé en ce qu'en position de montage, il est fixé à l'extrémité supérieure de la glissière (3) un cran d'arrêt pour le ressort et en ce que l'élément de carrosserie correspondant comporte un orifice dans lequel le cran d'arrêt du ressort se bloque lorsque la glissière (3) se trouve en position de montage théorique.

3. Véhicule à moteur selon la revendication 1 ou 2, caractérisé en ce que deux crans d'arrêt de ressort sont fixés à l'extrémité supérieure de la glissière (3), qui sont alignés avec les crochets de fixation (5) de la glissière (3) et qui, en position de montage, peuvent s'engrener dans des orifices de la carrosserie ou de la colonne (2), qui sont alignés avec les découpes d'ouvertures (6) dans lesquelles s'engagent les crochets de fixation (5).
